# EUROPÄISCHE PATENTANMELDUNG

(11) **EP 1 548 050 A1**
(43) Veröffentlichungstag der Anmeldung: **29.06.2005**
(21) Anmeldenummer: 03104382.1
(22) Anmeldetag: 26.11.2003
(51) Int. Cl.: C08J 9/12, C08J 9/14

(54) **Treibmittelgemisch**

(71) Anmelder: Solvay Fluor GmbH, 30173 Hannover (DE)
(72) Erfinder: Zipfel, Lothar, 30880 Laatzen (DE)
(74) Vertreter: Kulik, Angelika

(57) **Zusammenfassung**

Die Erfindung bezieht sich auf Treibmittelmischungen, welche mindestens einen teilfluorierten Kohlenwasserstoff und die üblichen Hilfs- und Zusatzstoffe enthalten, wobei der Inertgasanteil, gemessen in der Dampfphase des Treibmittels oder der Treibmittelmischung, 1,5 Vol.-% nicht überschreiten soll.

Die Treibmittelmischung kann zur Herstellung von Schaumprodukten aus thermoplastischen Kunststoffen, insbesondere Schaumpolystyrol, verwendet werden.

## Beschreibung

Die vorliegende Erfindung betrifft Treibmittelgemische auf der Basis von fluorierten Kohlenwasserstoffen und üblichen Hilfs- und Zusatzstoffen sowie ihre Verwendung zur Herstellung von thermoplastischen Kunststoffschäumen.

Es ist bereits bekannt, teilfluorierte Kohlenwasserstoffe als Treibmittel für die Herstellung von geschäumten Kunststoffen zu verwenden. Geschäumte Kunststoffe können in Form von Platten als wärme- bzw. geräuschisolierendes Bauteil eingesetzt werden.

Die US-A 5,276,063 offenbart ein Verfahren zur Herstellung extrudierter, geschlossenzelliger Polymere unter Verwendung eines Treibmittelgemisches, welches 1,1-Difluorethan sowie ein weiteres Treibmittel mit geringerem Dampfdruck und höherer Löslichkeit im Polymer enthält.

Die US-A 5,204,169 offenbart die Herstellung von geschäumten thermoplastischen Kunststoffen unter Verwendung von polyfluorierten Kohlenwasserstoffen mit 2 C-Atomen.

Die WO 02/051919 offenbart ein Treibmittelgemisch, welches fluorierte Kohlenwasserstoffe mit einem Siedepunkt >30 °C und <120 °C, niedrigsiedende Alkohole und niedrigsiedende Carbonylverbindungen enthält. Dieser Schrift ist weiter zu entnehmen, daß anorganische Treibmittel wie Stickstoff, Wasser oder Luft im Treibmittelgemisch enthalten sein können, ohne daß die Schaumeigenschaften negativ beeinflußt werden.

Die Aufgabe der Erfindung besteht darin, eine Treibmittelmischung bereitzustellen, welche zur Extrusion von thermoplastischen Kunststoffschäumen, vorzugsweise zur Extrusion von geschäumtem Polystyrol verwendet werden kann.

Die Aufgabe wird durch ein Treibmittel bzw. eine Treibmittelmischung auf der Basis von fluorierten Kohlenwasserstoffen mit einem Inertgasanteil, gemessen in der Dampfphase des Treibmittels bzw. der Treibmittelmischung, von maximal 1,5 Vol.-% gelöst.

In einer Ausführungsform der Erfindung enthält die Treibmittelmischung, gemessen in der Dampfphase, 0,1 bis 0,8 Vol.-%, vorzugsweise 0,4 bis 0,6 Vol.-% Inertgas.

Besonders bevorzugte Treibmittelmischungen enthalten 0,1 bis 0,6 Vol.-% Inertgas, gemessen in der Dampfphase.

Als Inertgas im Sinne der Erfindung sind Inertgase mit einem atmosphärischen Siedepunkt kleiner 120 K, insbesondere Stickstoff oder vorzugsweise Luft zu verstehen.

Die erfindungsgemäßen Treibmittelgemische eignen sich besonders gut zur Herstellung von thermoplastischen Kunststoffschäumen, insbesondere nach dem Extrusionsverfahren. Bei diesem Verfahren werden die das Treibmittel enthaltenden Kunststoffe direkt zu geschäumten Platten, Folien oder Profilen extrudiert. Die Kunststoffmasse schäumt unmittelbar nach Verlassen der Düse auf. Als Kunststoffe sind insbesondere alkylenaromatische Polymere z. B. Polystyrol zu verstehen.

Beispielsweise lassen sich Schaumstoffe vorzugsweise Schaumstoffplatten aus Polystyrol mit dem erfindungsgemäßen Treibmittelgemisch herstellen.

Als Treibmittel sind vorzugsweise die in der WO 99/61519 offenbarten Treibmittel und Treibmittelzusammensetzungen geeignet. So kann ein Treibmittel oder eine Treibmittelzusammensetzung verwendet werden, die mindestens ein Treibmittel ausgewählt aus der Gruppe umfassend Difluormethan; Difluorethan, vorzugsweise 1,1- Difluorethan (HFC-152a); Tetrafluorethan, vorzugsweise 1,1,2,2-Tetrafluorethan (HFC-134), 1,1,1,2-Tetrafluorethan (HFC -134a); Pentafluorpropan, vorzugsweise 1,1,1,3,3-Pentafluorpropan (HFC-245fa); Pentafluorbutan, vorzugsweise 1,1,1,3,3-Pentafluorbutan (HFC-365mfc); Hexafluorpropan, vorzugsweise 1,1,1,3,3,3-Hexafluorpropan (HFC-236fa), 1,1,2,3,3,3-Hexafluorpropan (HFC-236ea); Heptafluorpropan, vorzugsweise 1,1,1,2,3,3,3-Heptafluorpropan (HFC-227ea), niedrigsiedende gegebenenfalls halogenierte Kohlenwasserstoffe; niedrigsiedende, gegebenenfalls halogenierte Ether; niedrigsiedende Alkohole, vorzugsweise Ethanol, enthält.

Bevorzugte Treibmittelgemische enthalten 1,1-Difluorethan und/oder 1,1,1,2-Tetrafluorethan.

Gegebenenfalls können im Treibmittelgemisch weitere Hilfs- und Zusatzstoffe enthalten sein. Beispielweise kann man zusätzlich chemische Treibmittel wie Wasser einsetzen. Einsetzbar sind auch Katalysatoren wie beispielsweise tertiäre Amine und/oder organische Metallverbindungen. Es können oberflächenaktive Zusatzstoffe wie Emulgatoren oder Schaumstabilisatoren beispielsweise Siloxanpolyethercopolymere, Reaktionsverzögerer, Zellregler wie Paraffine, Fettalkohole oder Dimethylpolysiloxane, Pigmente, Farbstoffe, Flammschutzmittel wie Phosphatester oder Phosphonatester eingesetzt werden. Einsetzbar sind weiterhin Stabilisatoren gegen Alterungs- und Witterungseinflüsse, Weichmacher, Füllstoffe, Farbstoffe, Antistatika, Nukleisierungsmittel, Porenreglersubstanzen oder biozid wirksame Wirkstoffe.

Das erfindungsgemäße Treibmittel kann auch als solches, ohne die vorstehend genannten Hilfs- und Zusatzstoffe eingesetzt werden.

Es wurde gefunden, daß durch das erfindungsgemäße Treibmittel bzw. Treibmittelgemisch, bei der Herstellung von Schäumen, eine verbesserte physikalisch homogene Schaumqualität erreicht werden kann.

Ein weiterer Vorteil ist die dadurch verbesserte Wärmeleitfähigkeit der thermoplastischen Kunststoffschäume.

Die folgenden Beispiele sollen die Erfindung erläutern, ohne sie in ihrem Umfang einzuschränken.

### Beispiel 1:

In einer Extrusionsanlage wurden 210 kg/h Polystyrol mit HFC-152a und einem Luftanteil von 0,5 Vol.-%, gemessen in der Dampfphase des Treibmittels, bei einer Durchflußmenge von 19 kg/h HFC-152a zu Schaumstoffplatten verschäumt.

| | |
|---|---|
| Schaumdichte | 35,5 kg/m³ |
| Plattenstärke | 55 mm |

### Beispiel 2:

Analog Beispiel 1.

| | |
|---|---|
| Luftanteil, bestimmt in der Dampfphase: | 0,5 Vol.-% |
| Durchflußmenge (Treibmittel): | 22 kg/h |
| Treibmittelmischung: | HFC-134a und HFC-152a im Verhältnis 30:70 |

### Beispiel 3:

Analog Beispiel 1.

| | |
|---|---|
| Luftanteil, bestimmt in der Dampfphase: | 0,5 Vol.-% |
| Durchflußmenge (Treibmittel): | 24 kg/h |
| Treibmittelmischung: | HFC -134a und HFC 152a im Verhältnis 50:50. |

### Beispiel 4:

Die Beispiele 1 bis 3 wurden in Gegenwart von Ethanol zur Verbesserung der Prozeßführung wiederholt.

## Patentansprüche

1. Treibmittelmischung auf der Basis von fluorierten Kohlenwasserstoffen und den üblichen Hilfs- und Zusatzstoffen, **dadurch gekennzeichnet, daß** der Inertgasanteil, gemessen in der Dampfphase des Treibmittels bzw. der Treibmittelmischung, max. 1,5 Vol.-% beträgt.

2. Treibmittelmischung nach Anspruch 1, **dadurch gekennzeichnet, daß** der Inertgasanteil, gemessen in der Dampfphase des Treibmittels bzw. der Treibmittelmischung, 0,1 bis 0,8 Vol.-% beträgt.

3. Treibmittelmischung nach Anspruch 1, **dadurch gekennzeichnet, daß** der Inertgasanteil, gemessen in der Dampfphase des Treibmittels bzw. der Treibmittelmischung, 0,1 bis 0,6 Vol.-% beträgt.

4. Treibmittelmischung nach Anspruch 1, **dadurch gekennzeichnet, daß** die Inertgase Luft oder Stickstoff sind.

5. Treibmittelmischung nach Anspruch 1 bis 4, **dadurch gekennzeichnet, daß** in der Treibmittelmischung als fluorierte Kohlenwasserstoffe mindestens ein Treibmittel aus der Gruppe umfassend Difluormethan; Difluorethan, vorzugsweise 1,1-Difluorethan; Tetrafluorethan, vorzugsweise 1,1,1,2-Tetrafluorethan; Pentafluorpropan, vorzugsweise 1,1,1,3,3-Pentafluorpropan; Pentafluorbutan, vorzugsweise 1,1,1,3,3-Pentafluorbutan; Hexafluorpropan, vorzugsweise 1,1,1,3,3,3-Hexafluorpropan; Heptafluorpropan, vorzugsweise 1,1,1,2,3,3,3-Heptafluorpropan enthalten sind.

6. Treibmittelmischung nach Anspruch 1 bis 5, **dadurch gekennzeichnet, daß** die Treibmittelmischung 1,1-Difluorethan und/oder 1,1,1,2-Tetrafluorethan enthält.

7. Verfahren zur Herstellung von thermoplastischen Kunststoffschäumen, insbesondere Polystyrolschäumen durch Extrusion, **dadurch gekennzeichnet, daß** eine Treibmittelmischung gemäß Anspruch 1 bis 6 verwendet wird.

## Geänderte Patentansprüche

### Geänderte Patentansprüche gemäss Regel 86(2) EPÜ.

**1.** Treibmittelmischung auf der Basis von fluorierten Kohlenwasserstoffen und den üblichen Hilfs- und Zusatzstoffen, **dadurch gekennzeichnet, daß** die Treibmittelmischung Luft oder Stickstoff als Inertgas enthält und der Inertgasanteil, gemessen in der Dampfphase des Treibmittels bzw. der Treibmittelmischung, 0,1 bis 1,5 Vol.-% beträgt.

**2.** Treibmittelmischung nach Anspruch 1, **dadurch gekennzeichnet, daß** der Inertgasanteil, gemessen in der Dampfphase des Treibmittels bzw. der Treibmittelmischung, 0,1 bis 0,8 Vol.-% beträgt.

**3.** Treibmittelmischung nach Anspruch 1, **dadurch gekennzeichnet, daß** der Inertgasanteil, gemessen in der Dampfphase des Treibmittels bzw. der Treibmittelmischung, 0,1 bis 0,6 Vol.-% beträgt.

**4.** Treibmittelmischung nach Anspruch 1 bis 3, **dadurch gekennzeichnet, daß** in der Treibmittelmischung als fluorierte Kohlenwasserstoffe mindestens ein Treibmittel aus der Gruppe umfassend Difluormethan; Difluorethan, vorzugsweise 1,1-Difluorethan; Tetrafluorethan, vorzugsweise 1,1,1,2-Tetrafluorethan; Pentafluorpropan, vorzugsweise 1,1,1,3,3-Pentafluorpropan; Pentafluorbutan, vorzugsweise 1,1,1,3,3-Pentafluorbutan; Hexafluorpropan, vorzugsweise 1,1,1,3,3,3-Hexafluorpropan; Heptafluorpropan, vorzugsweise 1,1,1,2,3,3,3-Heptafluorpropan enthalten sind.

**5.** Treibmittelmischung nach Anspruch 1 bis 4, **dadurch gekennzeichnet, daß** die Treibmittelmischung 1,1-Difluorethan und/oder 1,1,1,2-Tetrafluorethan enthält.

**6.** Verfahren zur Herstellung von thermoplastischen Kunststoffschäumen, insbesondere Polystyrolschäumen durch Extrusion, **dadurch gekennzeichnet, daß** eine Treibmittelmischung gemäß Anspruch 1 bis 5 verwendet wird.
